# EUROPÄISCHE PATENTSCHRIFT

(11) **EP 0 473 615 B1**
(45) Veröffentlichungstag und Bekanntmachung des Hinweises auf die Patenterteilung: **04.08.1993**
(21) Anmeldenummer: 90906863.7
(22) Anmeldetag: 14.05.1990
(51) Int. Cl.: F16K 1/36, F16K 39/02

(54) **ABSPERRVENTIL**
CHECK VALVE
SOUPAPE D'ARRET

(30) Priorität: 24.05.1989 DE 3916885
(43) Veröffentlichungstag der Anmeldung: 11.03.1992
(73) Patentinhaber: ABS Pumpen AG, 53785 Lohmar (DE)
(72) Erfinder: KRÄMER, Günter, D-5900 Siegen 1 (DE)
(74) Vertreter: Patentanwälte Lippert, Stachow, Schmidt & Partner
(86) Internationale Anmeldenummer: DE9000352
(87) Internationale Veröffentlichungsnummer: WO9014537

(56) Entgegenhaltungen:
- BE-A- 501 347
- FR-A- 898 646
- FR-A- 1 581 748
- FR-A- 2 011 024

## Beschreibung

Die Erfindung betrifft ein Absperrventil mit einem Ventilgehäuse, an dem mindestens zwei Anschlußstutzen vorgesehen sind.

Bei einem bekannten Ventilgehäuse der genannten Art (FR-A-1 581 748) ist ein zylindrischer Durchgang für das Fördermedium vorgesehen. Ein konisch ausgebildeter Ventilkörper aus elastischem Material wird von einer Seite gegen den Rand des Durchgangs gedrückt und dichtet den Ventildurchgang im Randbereich ab. Eine zusätzliche Dichtwirkung wird dadurch erreicht, daß der Ventilkörper eine mittige Ausnehmung aufweist, so daß ein umlaufender Dichtungskragen entsteht. Wenn der Ventilkörper entgegen seiner Druckrichtung mit einem Druckmedium beaufschlagt wird, so preßt das Druckmedium den Dichtungskragen gegen die zylindrische Wand des Ventildurchgangs.

Dieses bekannte Absperrventil arbeitet also lediglich mit einer kraftschlüssigen Anlage der jeweiligen Dichtungsteile am Ventilsitz. Darüber hinaus wirkt das zweite Dichtungselement, nämlich der durch das Druckmedium nach außen preßbare Dichtungskragen, nur dann, wenn das Druckmedium sich auf der Seite des Dichtungskragens befindet.

Bei einem anderen bekannten Ventilgehäuse (FR-A-898 646) ist ein Durchflußquerschnitt vorgesehen, der nach Art einer Einschnürung ausgebildet ist und in seinem mittleren Bereich einen engsten Querschnitt aufweist. Die Dichtungsfläche des Durchflußquerschnitts liegt im Bereich dieses engsten Querschnitts. Der Dichtungskörper ist mit einer umlaufenden Dichtungsfläche versehen, die mit der Dichtungsfläche des Durchflußquerschnitts zur Anlage gebracht werden kann. Dabei wird eine kraftschlüssige Dichtung erreicht.

Der Erfindung liegt die Aufgabe zugrunde, ein Ventil zu schaffen, welches in beiden Druckrichtungen gleichermaßen und darüber hinaus sehr zuverlässig wirksam ist.

Diese Aufgabe wird durch die Kombination folgender Merkmale gelöst:
- es ist mindestens ein Ventilsitz vorgesehen, der in einem der Anschlußstutzen angeordnet ist, sich über einen längeren Bereich erstreckt und etwa in seinem mittleren Abschnitt einen engsten Querschnitt aufweist;
- der Ventilsitz weist mindestens zwei auf gegenüberliegenden Seiten seines engsten Querschnitts angeordnete Sitzflächen auf;
- es ist ein Ventilkörper vorgesehen, der aus einem zusammenhängenden Dichtkörper aus elastischem Material besteht und mindestens zwei umlaufende Dichtflächen aufweist, die mit den auf gegenüberliegenden Seiten des engsten Querschnitts liegenden Sitzflächen des Ventilsitzes zusammenwirken;
- eine der umlaufenden Dichtflächen des Ventilkörpers weist einen vorgegebenen Durchmesser auf, der größer als der engste Querschnitt des Ventilsitzes ist;
- die andere umlaufende Dichtfläche des Ventilkörpers ist spreizbar und weist im ungespreizten Zustand einen Durchmesser auf, der kleiner als der engste Querschnitt des Ventilsitzes ist, und im gespreizten Zustand größer als der engste Querschnitt des Ventilsitzes ist, wobei zum Aufspreizen dieser Dichtungsfläche ein mittiges, axial verschiebliches, kegelstumpfförmiges Spreizelement vorgesehen ist.

Gegenüber dem bekannten Absperrventil weist das erfindungsgemäße Absperrventil erhebliche Vorteile auf. Im abgedichteten Zustand sitzt der Ventilkörper formschlüssig in dem Ventilsitz. Die Sitzflächen des Ventilsitzes liegen zu beiden Seiten des engsten Querschnitts, wobei die eine Dichtfläche gegen den einen Ventilsitz und die andere aufspreizbare Dichtfläche gegen die andere Sitzfläche gedrückt wird. Auf diese Weise wird ein formschlüssiger Dichtsitz geschaffen, der sehr stabil ist. Aufgrund der Tatsache, daß die umlaufenden Dichtflächen des Ventilkörpers zu beiden Seiten des engsten Querschnitts angeordnet sind, wird eine Dichtwirkung geschaffen, die gleichermaßen in beiden Durchflußrichtungen wirkt. Dabei funktioniert das Ventil auch dann zuverlässig, wenn die Durchflußrichtung des Druckmediums umgekehrt wird.

Das erfindungsgemäße Absperrventil ist in seinem geschlossenen Zustand von beiden Seiten beaufschlagbar. Es kann also bei einseitigen Druckverhältnissen beliebig herum eingebaut werden. Wenn Drücke von verschiedenen Seiten zu erwarten sind, so dichtet das Absperrventil von beiden Seiten zuverlässig ab. Von beiden Seiten können relativ hohe Drücke aufgenommen werden und es kann von beiden Seiten ein Selbstdichtungseffekt eintreten. Darüber hinaus kann das erfindungsgemäße Absperrventil schnell und einfach betätigt werden.

Zweckmäßig weist der Dichtkörper an seinen beiden axialen Endbereichen Dichtungskragen auf, von denen einer spreizbar ist. Dabei kann der Ventilsitz als durchgehende, gerundete Einschnürung ausgebildet sein, wobei sich der durchgehende Dichtkörper von beiden Seiten der engsten Stelle gegen den Ventilsitz anlegt.

Der Dichtkörper ist vorzugsweise auf einem mittig angeordneten Träger aus im wesentlichen starrem Material angeordnet, wobei das von außen zu betätigende Stellglied an dem Träger angreift.

Der Träger kann scheibenförmig ausgebildet sein und in Höhe des nicht spreizbaren Kragens sitzen.

Die innere Kontur des spreizbaren Kragens ist vorzugsweise konisch ausgebildet, wobei sich der lichte Querschnitt zum freien Ende des Kragens hin erweitert.

Der axial verschiebliche Ventilkörper kann zusätzlich undrehbar geführt sein, um eine einwandfreie Betätigung sicherzustellen. Dabei können in dem Ventilgehäuse auf gegenüberliegenden Seiten Längsführungen ausgebildet sein, die in entsprechende Gegenführungen am Ventilkörper angreifen.

Der Träger sitzt zweckmäßig auf einer über eine Gehäusedichtung nach außen geführten Betätigungsstange, die axial verschieblich und um ihre Längsachse drehbar ist, wobei der Träger auf dieser drehbar, aber im wesentlichen axial unverschieblich befestigt ist. Durch eine axiale Verschiebung der Betätigungsstange wird also der Ventilkörper mitgenommen, wobei der nicht spreizbare Kragen gegen den Ventilsitz angedrückt und von diesem wieder abgehoben werden kann. Eine Drehung der Betätigungsstange um ihre Achse beeinflußt den Sitz des nicht spreizbaren Kragens nicht.

Die Betätigungsstange greift vorzugsweise durch eine mittige Bohrung des Trägers hindurch und das durch den Träger hindurchgreifende Ende der Betätigungsstange ist mit Gewinde versehen. Das Spreizelement weist zweckmäßig eine mittige Gewindebohrung auf, in die das Gewindeende der Betätigungsstange eingreift. Dabei ist das Spreizelement zweckmäßig relativ zu dem Träger axial verschieblich, aber undrehbar geführt.

Wenn also der Ventilkörper durch Axialverschiebung der Betätigungsstange mit dem nicht spreizbaren Kragen gegen den Ventilsitz gedrückt ist, so kann die Betätigungsstange in der Weise gedreht werden, daß das Spreizelement sich in Richtung gegen den Träger bewegt und dadurch den spreizbaren Kragen aufweitet, der sich dann auf der gegenüberliegenden Seite der engsten Stelle gegen den Ventilsitz anlegt.

Die undrehbare Führung des Spreizelementes relativ zu dem Träger kann dadurch erreicht werden, daß an der dem Spreizelement zugewandten Fläche des Trägers zwei oder drei gleichmäßig über den Umfang verteilt angeordnete Führungsbolzen sitzen, die in entsprechende Gleitbohrungen des Spreizelementes eingreifen.

Um auch die geöffnete Lage des Ventilkörpers zu fixieren, kann in der Betätigungsstange eine Ausnehmung vorgesehen sein, in die bei geöffneter Ventilstellung eine Haltefeder einrastet. Durch entsprechenden Gegendruck in Richtung auf die Schließstellung kann dieser Klemmsitz ohne weiteres wieder freigegeben werden.

Die Erfindung ist in der Zeichnung beispielsweise veranschaulicht und im nachstehenden im einzelnen anhand der Zeichnung beschrieben. Es zeigen:
- Fig. 1: einen Längsschnitt durch ein Ausführungsbeispiel des Absperrventils und
- Fig. 2: in vergrößertem Maßstab einen Schnitt entlang der Linie II-II aus Fig. 1.

Nach der Zeichnung ist das Absperrventil von einem Ventilgehäuse 1 umgeben, welches zwei um 90° zueinander versetzte Anschlußstutzen 2 und 3 aufweist.

Der in der Zeichnung nach unten gerichtete Anschlußstutzen 3 ist in seinem unmittelbar an das Ventilgehäuse 1 angrenzenden Bereich mit einem Ventilsitz 4 versehen. Der Ventilsitz 4 erstreckt sich über einen längeren Bereich nach Art einer Rundung, die etwa in ihrem mittleren Abschnitt einen engsten Querschnitt 5 aufweist.

Mit dem Ventilsitz 4 wirkt ein Ventilkörper 6 zusammen, der auf einer Betätigungsstange 7 sitzt.

Die Betätigungsstange 7 liegt genau in der Achse des nach unten weisenden Anschlußstutzens 3 und damit auch in der Achse des Ventilsitzes 4. Die Betätigungsstange 7 ist in dem Gehäusewandabschnitt 8 gelagert, der dem nach unten weisenden Anschlußstutzen 3 gegenüberliegt und ist durch diesen hindurch nach außen geführt. An ihrem äußeren Ende ist die Betätigungsstange 7 mit einem flachen, runden Handgriff 9 versehen, über den die Betätigungsstange 7 in axialer Richtung verschiebbar und um ihre Längsachse drehbar ist.

Der Wandabschnitt 8 ist in dem Durchführungsbereich der Betätigungsstange 7 mit einem nach innen gezogenen Vorsprung 10 versehen, der eine erste Lagerstelle für die Betätigungsstange 7 bildet. Ein zweites Lager wird durch eine eingesetzte Scheibe 11 gebildet, die von außen gegen einen Absatz 12 angelegt ist und mit Hilfe eines Sicherungsrings 13 in ihrer Lage gehalten wird. Zwischen der Scheibe 11 und der Außenwand des nach innen gerichteten Vorsprungs 10 ist eine Dichtung 14 angeordnet, die den Durchführungsbereich der Betätigungsstange 7 abdichtet.

Der Ventilkörper 6 sitzt auf dem dem Handgriff 9 abgewandten Endabschnitt der Betätigungsstange 7. Der Ventilkörper 6 besteht aus einem langgestreckten, zusammenhängenden Dichtkörper 15, der aus elastischem Material gefertigt ist und an seinen beiden axialen Endbereichen je einen Dichtungskragen 16 bzw. 17 aufweist.

Der Dichtkörper 15 ist als rotationssymmetrischer Körper ausgebildet und weist in der Mitte einen axialen Durchgang 18 auf, durch den die Betätigungsstange 7 hindurchgeführt ist.

Der Dichtkörper sitzt auf einem mittig angeordneten Träger 19 aus starrem Material, vorzugsweise Metall. Der Träger 19 ist scheibenförmig ausgebildet und sitzt etwa in Höhe des oberen Dichtungskragens 16. In seiner Mitte ist der Träger 19 mit einer Lagerbohrung versehen, durch die die Betätigungsstange 7 drehbar hindurchgreift. Mit Hilfe von zwei Sicherungsringen 20 und 21, die an der Ober- und Unterseite des Trägers 19 anliegen und in umlaufende Nuten der Betätigungsstange 7 eingeschnappt sind, ist der Träger in Axialrichtung relativ zu der Betätigungsstange 7 fixiert.

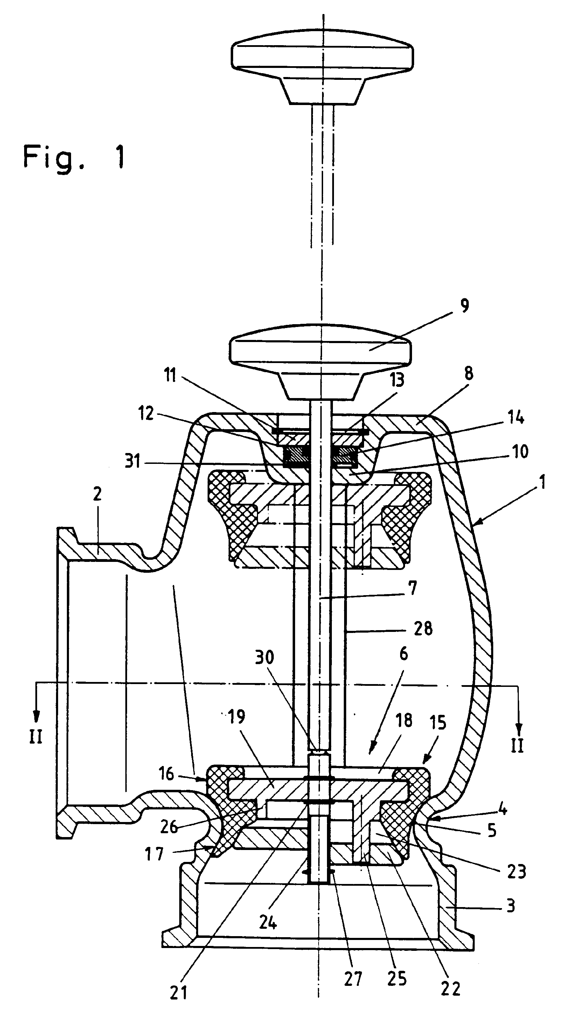

Der in der Zeichnung unten liegende Dichtungskragen 17 ist spreizbar ausgebildet. In der in Fig. 1 rechts dargestellten Position weist der Dichtungskragen 17 seine ungespreizte Stellung auf, in der sein Außendurchmesser kleiner ist als der engste Querschnitt 5 des Ventilsitzes 4, so daß der Ventilkörper 6 beim Absenken der Betätigungsstange 7 mit seinem unteren Dichtungskragen 17 durch den engsten Querschnitt 5 des Ventilsitzes 4 hindurchgeführt werden kann. Wenn dann der obere Dichtungskragen 16 auf dem Ventilsitz 4 aufliegt und der Ventilkörper somit seine Endposition einnimmt, kann der untere Dichtungskragen 17 aufgespreizt werden, wie in der linken Hälfte von Fig. 1 dargestellt. In dieser Position greift der untere Dichtungskragen 17 um den unteren Bereich des Ventilsitzes 4 herum und nimmt einen Durchmesser ein, der größer ist als der engste Querschnitt 5 des Ventilsitzes.

Das Aufspreizen des unteren Dichtungskragens 17 erfolgt mit Hilfe eines mittigen, axial verschieblichen Spreizelementes 22, welches eine kegelstumpfförmige, sich nach oben in Richtung zum Ventilkörper hin verjüngende Gestalt aufweist. Der aufspreizbare Dichtungskragen 17 weist eine entsprechend konische innere Ausnehmung 23 auf, die beim Eindringen des Spreizelements 22 nach außen gedrückt wird und den Dichtungskragen 17 in seine Dichtposition drückt.

Das Spreizelement 22 weist eine mittige Gewindebohrung auf, durch die das untere Ende der Betätigungsstange 7 mit einem Gewindeabschnitt 24 eingreift. Gegenüber dem Träger 19 ist das Spreizelement 22 undrehbar, aber axial verschieblich geführt. Zur Führung dienen beispielsweise drei über den Umfang verteilt angeordnete Führungsbolzen 25, die an der Unterseite des Trägers 19 in axialer Lage angeordnet sind und durch entsprechende, in dem Spreizelement 22 vorgesehene Führungsbohrungen hindurchgreifen.

Zur Begrenzung der Bewegung des Spreizelementes 22 nach oben ist an der Unterseite des Trägers 19 ein Anschlagring 26 angeformt. Die Bewegung nach unten ist durch einen quer durch die Betätigungsstange 7 greifenden Begrenzungsstift 27 oder durch einen Sicherungsring begrenzt, so daß die Betätigungsstange nicht aus dem Spreizelement 22 herausgedreht werden kann.

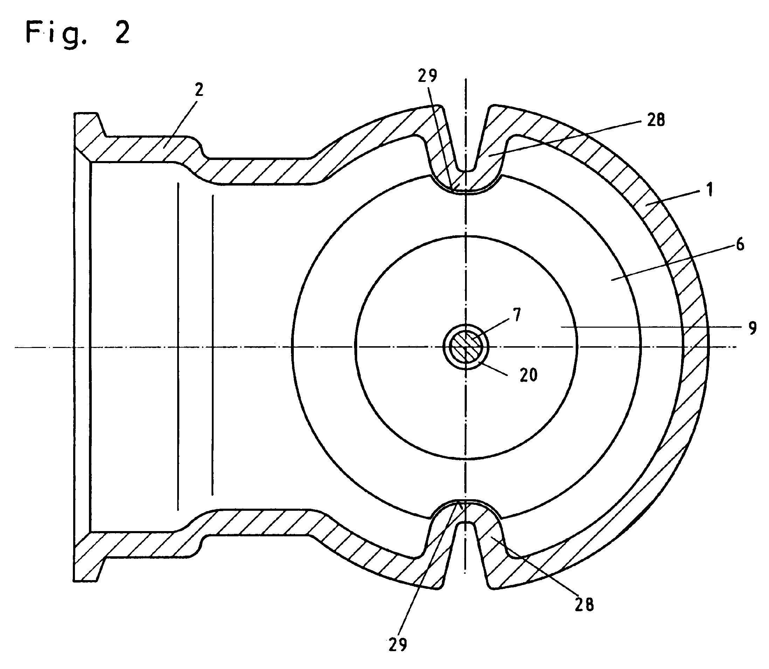

Bei Einleitung des Spreizvorgangs des unteren Dichtungskragens 17 muß die Betätigungsstange 7 um ihre Achse gedreht werden. Um zu verhindern, daß sich der Ventilkörper 6 mitdreht, ist dieser gegen Drehung gesichert. Wie insbesondere aus Fig. 2 zu entnehmen ist, sind im Gehäuseinneren parallel zur Betätigungsstange 7 verlaufende Führungsschienen 28 angeordnet, die sich über die gesamte Höhe des Verschiebungsbereichs des Ventilkörpers 6 erstrecken und unmittelbar an das Ventilgehäuse 1 angeformt sind. Die Führungsschienen 28, die auf gegenüberliegenden Seiten des Ventilkörpers 6 angeordnet sind, greifen in seitliche Ausnehmungen 29 des Ventilkörpers ein, so daß dieser nur in axialer Richtung verschieblich ist.

In Fig. 1 der Zeichnung sind drei Positionen des Ventilkörpers 6 dargestellt. Die obere Position stellt die Freigabeposition dar, in der ein freier Durchgang durch das Ventilgehäuse 1 möglich ist, und zwar in beiden Richtungen.

Wenn das Ventil geschlossen werden soll, wird durch Druck auf den Handgriff 9 die Ventilstange 7 so weit nach unten geschoben, bis der obere Dichtungskragen 16 auf dem oberen Bereich des Ventilsitzes 4 aufliegt. Diese Position, bei der der untere Dichtungskragen 17 ungespreizt ist, ist in der rechten Seite in Fig. 1 dargestellt.

Wenn in dieser Position der nach links weisende Anschlußstutzen 2 der Druckstutzen ist, so wird der Ventilkörper bereits mit Druck beaufschlagt und es tritt ein Selbstdichtungseffekt ein. Der untere Dichtungskragen braucht dann nur noch als zusätzliche Sicherung gespreizt zu werden. Das Ventil funktioniert aber auch ohne die Aufspreizung des unteren Dichtungskragens 17.

Wenn dagegen der nach unten weisende Anschlußstutzen 3 der Druckstutzen ist, so muß in jedem Falle der untere Dichtungskragen 17 in die gespreizte Stellung gebracht werden, wie in der linken Seite in Fig. 1 dargestellt. In dieser Position drückt das Medium auf den aufgespreizten unteren Dichtungskragen 17, wodurch ebenfalls ein Selbstdichtungseffekt im Bereich des unteren Dichtungskragens 17 erzielt wird.

Zum Öffnen des Ventils wird zunächst die Betätigungsstange 7 in diejenige Richtung gedreht, bei der sich das Spreizelement 22 nach unten bewegt, so daß der untere Dichtungskragen 17 wieder seine ungespreizte Stellung einnehmen kann, in der er sich nach oben durch den engsten Querschnitt 5 des Ventilsitzes 4 bewegen kann. Dann wird die Betätigungsstange 7 nach oben gezogen. Um die Betätigungsstange in ihrer Öffnungsposition zu halten, ist diese mit einer umlaufenden Nut 30 versehen, die mit einer Haltefeder 31 zusammenwirkt. Die Haltefeder 31 ist als Federdraht ausgebildet, der in den Bereich zwischen dem in dem Vorsprung 10 vorgesehenen Lagersitz und der Dichtung 14 angeordnet ist. Beim Nachobenbewegen der Betätigungsstange 7 schnappt in der entsprechenden Position die Haltefeder 31 in die Nut ein und hält die Betätigungsstange in dieser Position fest. Beim Nachuntendrücken der Betätigungsstange löst sich die Haltefeder 31 aus der Nut 30 und gibt die Betätigungsstange 7 frei.

### Bezugszeichenliste

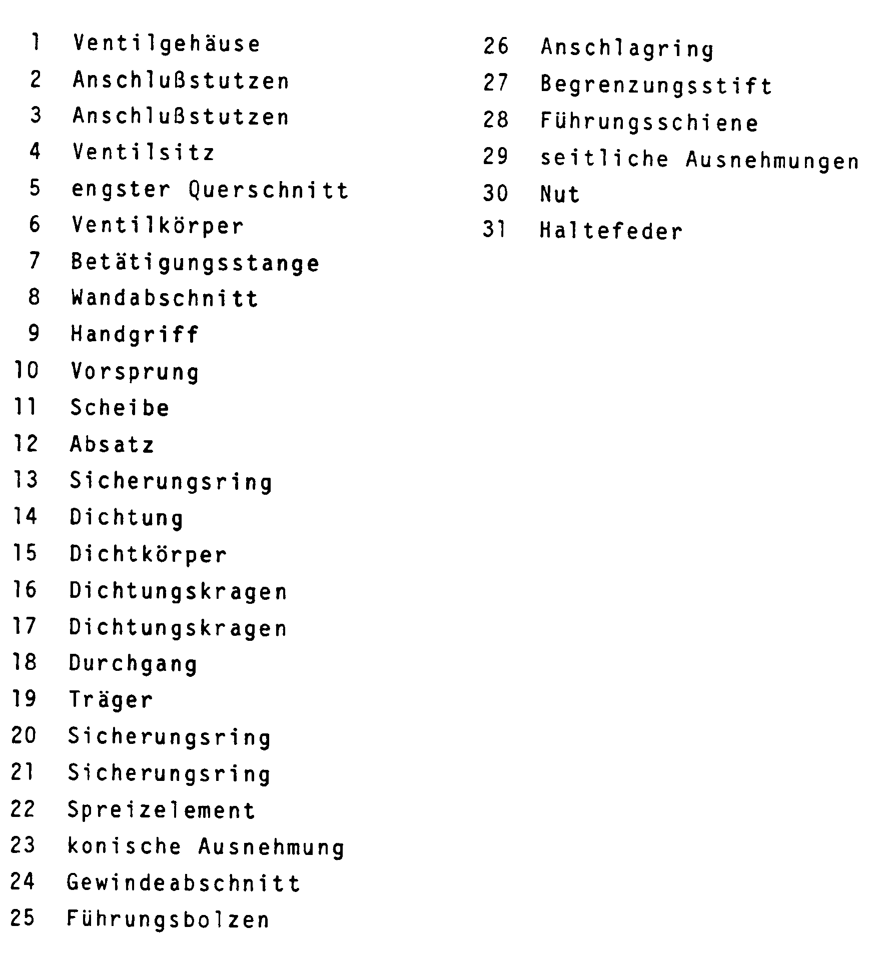

## Patentansprüche

1. Absperrventil mit einem Ventilgehäuse (1), an dem mindestens zwei Anschlußstutzen (2, 3) vorgesehen sind, mit folgenden weiteren Merkmalen:
- es ist mindestens ein Ventilsitz (4) vorgesehen, der in einem der Anschlußstutzen angeordnet ist, sich über einen längeren Bereich erstreckt und etwa in seinem mittleren Abschnitt einen engsten Querschnitt (5) aufweist;
- der Ventilsitz (4) weist mindestens zwei auf gegenüberliegenden Seiten seines engsten Querschnitts (5) angeordnete Sitzflächen auf;
- es ist ein Ventilkörper (6) vorgesehen, der aus einem zusammenhängenden Dichtkörper (15) aus elastischem Material besteht und mindestens zwei umlaufende Dichtflächen aufweist, die mit den auf gegenüberliegenden Seiten des engsten Querschnitts (5) liegenden Sitzflächen des Ventilsitzes zusammenwirken;
- eine der umlaufenden Dichtflächen des Ventilkörpers (6) weist einen vorgegebenen Durchmesser auf, der größer als der engste Querschnitt (5) des Ventilsitzes (4) ist;
- die andere umlaufende Dichtfläche des Ventilkörpers (6) ist spreizbar und weist im ungespreizten Zustand einen Durchmesser auf, der kleiner als der engste Querschnitt (5) des Ventilsitzes (4) ist, und im gespreizten Zustand größer als der engste Querschnitt des Ventilsitzes (4) ist, wobei zum Aufspreizen dieser Dichtungsfläche ein mittiges, axial verschiebliches, kegelstumpfförmiges Spreizelement (22) vorgesehen ist.

2. Absperrventil nach Anspruch 1, **dadurch gekennzeichnet,** daß der Dichtkörper (15) an seinen beiden axialen Endbereichen Dichtungskragen (16, 17) aufweist, von denen einer spreizbar ist.

3. Absperrventil nach Anspruch 2, **dadurch gekennzeichnet,** daß der Dichtkörper (15) auf einem mittig angeordneten Träger (19) aus im wesentlichen starren Material sitzt und daß das Stellglied an dem Träger (19) angreift.

4. Absperrventil nach Anspruch 3, **dadurch gekennzeichnet,** daß der Träger (19) scheibenförmig ausgebildet ist und in Höhe des nicht spreizbaren Kragens (16) sitzt.

5. Absperrventil nach Anspruch 4, **dadurch gekennzeichnet,** daß die innere Kontur des spreizbaren Dichtungskragens (17) konisch ausgebildet ist, wobei sich der lichte Querschnitt zum freien Ende des Kragens hin erweitert.

6. Absperrventil nach einem der Ansprüche 3 bis 5, **dadurch** **gekennzeichnet,** daß der axial verschiebliche Ventilkörper (6) undrehbar geführt ist.

7. Absperrventil nach Anspruch 6, **dadurch gekennzeichnet,** daß in dem Ventilgehäuse (1) auf gegenüberliegenden Seiten Längsführungen (28) ausgebildet sind, die in entsprechende Gegenführungen (29) am Ventilkörper (6) eingreifen.

8. Absperrventil nach einem der Ansprüche 3 bis 7, **dadurch** **gekennzeichnet,** daß der Träger (19) auf einer über eine Gehäusedichtung (14) nach außen geführten Betätigungsstange (7) sitzt, die axial verschieblich und um ihre Längsachse drehbar ist, und daß der Träger (19) auf dieser drehbar, aber im wesentlichen axial unverschieblich befestigt ist.

9. Absperrventil nach Anspruch 8, **dadurch gekennzeichnet,** daß die Betätigungsstange (7) durch eine mittige Bohrung des Trägers (19) hindurchgreift, daß das durch den Träger hindurchgreifende Ende der Betätigungsstange (7) mit Gewinde (24) versehen ist und daß das Spreizelement (22) eine mittige Gewindebohrung aufweist, in die das Gewindeende der Betätigungsstange (7) eingreift.

10. Absperrventil nach Anspruch 9, **dadurch gekennzeichnet,** daß das Spreizelement (22) relativ zu dem Träger (19) axial verschieblich, aber undrehbar geführt ist.

11. Absperrventil nach Anspruch 10, **dadurch gekennzeichnet,** daß an der dem Spreizelement (22) zugewandten Fläche des Trägers (19) mindestens zwei gleichmäßig über den Umfang verteilt angeordnete Führungsbolzen (25) sitzen, die in entsprechende Gleitbohrungen des Spreizelements (22) eingreifen.

12. Absperrventil nach einem der Ansprüche 8 bis 11, **dadurch** **gekennzeichnet,** daß in der Betätigungsstange (7) eine Ausnehmung (30) vorgesehen ist, in die bei geöffneter Ventilstellung eine Haltefeder (31) einrastet.

## Claims

1. Check valve with a valve chamber (1) having at least two connecting sockets (2, 3) with the following further features:
- it is provided at least one valve seat (4) located in one of the connecting sockets, extending over a longer range and having in about its middler segment a smallest cross section (5);
- the valve seat (4) has at least two seats which are situated at opposite sides the smallest cross section (5);
- it is provided a valve body (6) consisting out of a continous sealing body (15) made of elastic material and having at least two circumferential sealing areas which cooperate with the seats situated at opposite sides of the smallest cross section (5);
- one of the circumferential sealing areas of the valve body (6) provides a predetermined diameter which is larger than the smallest cross section (5) of the valve seat (4);
- the other circumferential sealing area of the valve body (6) is expandable and provides in the unexpanded state a diameter which is smaller than the smallest cross section (5) of the valve seat (4) and which is in the expanded state larger than the smallest cross section of the valve seat (4) whereby a centric, axially shiftable, truncated-cone shaped expanding element (22) is provided.

2. Check valve according to claim 1 characterized in that the sealing body (15) has at his both axial endings sealing collars (16, 17) whereby one of them is expandable.

3. Check valve according to claim 2 characterized in that the sealing body (15) is located at one centric situated carrier (19) made out of essentially rigid material and that the correcting element approaches at the carrier (19).

4. Check valve according to claim 3 characterized in that the carrier (19) has the shape of a disc and is located in the height of the unexpandable sealing collar (16).

5. Check valve according to claim 4 characterized in that the inner contour of the expandable sealing collar (17) is conically shaped whereby the unobstructed cross section is broadening to the free end of the collar.

6. Check valve according to one of the claims 3 to 5 characterized in that the axially shiftable valve body (6) is guided unrotatably.

7. Check valve according to claim 6 characterized in that in the valve chamber (1) at opposite sides guide rails (28) are provided gearing in the corresponding lateral recesses (29) of the valve chamber (6).

8. Check valve according to one of the claims 3 to 7 characterized in that the carrier (19) sits on an actuation bar (7) which is led by a sealing (14) outside and which is axially shiftable and rotatable around its longitudinal axis and that the carrier (19) is rotatable on said actuation bar (7) but essentially axially unshiftably mounted.

9. Check valve according to claim 8 characterized in that the actuation bar (7) gears through a centric bore hole of the carrier (19), that the end of the actuation bar (7) gearing through the carrier has a winding (24) and that the expanding element (22) has a centric thread into which the windingend of the actuation bar (7) gears.

10. Check valve according to claim 9 characterized in that the expanding element (22) is guided axially movably relative to the carrier (19) but unrotatably.

11. Check valve according to claim 10 characterized in that there sit at the area of the carrier (19) facing the expanding element (22) at least two guiding bolts (25) which are distributed equally over the circumference and which are gearing into the corresponding gliding bores of the expanding element (22).

12. Check valve according to one of the claims 8 to 11 characterized in that in the actuation bar (7) a recess (30) is provided into which a retaining spring (31) is engaging in the opened valve state.

## Revendications

1. Robinet à soupape d'arrêt, comprenant un corps de robinet (1) sur lequel il est prévu au moins deux tubulures de raccordement (2, 3), et présentant les caractéristiques supplémentaires suivantes:
- il est prévu au moins un siège (4) qui est disposé dans l'une des tubulures de raccordement, s'étend sur une distance assez grande et présente sa section transversale la plus étroite (5) à peu près dans sa partie médiane;
- le siège (4) présente au moins deux surfaces d'appui de part et d'autre de sa section transversale la plus étroite (5);
- il est prévu un obturateur (6) qui se compose d'une pièce cohérente de fermeture étanche (15) en une matière élastique et qui présente au moins deux surfaces d'étanchéité circonférentielles qui coopèrent avec les surfaces d'appui du siège situées de part et d'autre de la section transversale la plus étroite (5);
- l'une des surfaces d'étanchéité circonférentielles de l'obturateur (6) présente un diamètre prédéterminé qui est plus grand que la section transversale la plus étroite (5) du siège 4);
- l'autre surface d'étanchéité circonférentielle de l'obturateur (6) est élargissable et présente, à l'état non élargi, un diamètre qui est plus petit que la section transversale la plus étroite (5) du siège (4) et, à l'état élargi, un diamètre plus grand que la section transversale la plus étroite du siège (4), un élément d'élargissement central (22), en forme de tronc de cône et mobile axialement, étant prévu pour l'élargissement de cette surface d'étanchéité.

2. Robinet à soupape d'arrêt selon la revendication 1, caractérisé en ce que la pièce de fermeture étanche (15) présente, dans la région de ses deux extrémités axiales, des collets d'étanchéité (16, 17) dont l'un est élargissable.

3. Robinet à soupape d'arrêt selon la revendication 2, caractérisé en ce que la pièce de fermeture étanche (15) est placée sur un support (19) en une matière essentiellement rigide, disposé au centre, et en ce que l'organe de manoeuvre agit sur ce support (19).

4. Robinet à soupape d'arrêt selon la revendication 3, caractérisé en ce que le support (19) est réalisé en forme de disque et est placé à la hauteur du collet non élargissable (16).

5. Robinet à soupape d'arrêt selon la revendication 4, caractérisé en ce que le profil intérieur du collet d'étanchéité élargissable (17) est réalisé sous forme conique, sa section intérieure libre augmentant en direction de l'extrémité libre du collet.

6. Robinet à soupape d'arrêt selon l'une quelconque des revendications 3 à 5, caractérisé en ce que l'obturateur axialement mobile (6) est guidé sans possibilité de rotation.

7. Robinet à soupape d'arrêt selon la revendication 6, caractérisé en ce qu'il est formé dans le corps de robinet (1), sur des côtés opposés, des guides longitudinaux (24) qui s'engagent dans des contre-guides correspondants (29) sur l'obturateur (6).

8. Robinet à soupape d'arrêt selon l'une quelconque des revendications 3 à 7, caractérisé en ce que le support (19) est monté sur une tige d'actionnement (7) qui s'étend vers l'extérieur à travers une garniture d'étanchéité (14) du corps de robinet, tige qui est mobile axialement et peut tourner autour de son axe longitudinal, et en ce que le support (19) est fixé sur cette tige de sorte que, par rapport à elle, il puisse tourner, mais ne puisse pratiquement pas se déplacer axialement.

9. Robinet à soupape d'arrêt selon la revendication 8, caractérisé en ce que la tige d'actionnement (7) passe à travers une forure centrale du support (19), en ce que l'extrémité de la tige d'actionnement (7) qui passe à travers le support est munie d'un filetage (24) et en ce que l'élément d'élargissement (22) présente une forure centrale taraudée dans laquelle se visse l'extrémité filetée de la tige d'actionnement (7).

10. Robinet à soupape d'arrêt selon la revendication 9, caractérisé en ce que l'élément d'élargissement (22) est mobile axialement par rapport au support (19), mais est guidé sans possibilité de rotation.

11. Robinet à soupape d'arrêt selon la revendication 10, caractérisé en ce qu'il est disposé, sur la surface du support (19) dirigée vers l'élément d'élargissement (22), au moins deux chevilles de guidage (25) qui sont réparties uniformément sur la circonférence et qui s'engagent à glissement dans des forures correspondantes de l'élément d'élargissement (22).

12. Robinet à soupape d'arrêt selon l'une quelconque des revendications 8 à 11, caractérisé en ce qu'il est prévu, dans la tige d'actionnement (7), une encoche (30) dans laquelle s'encliquette un ressort de blocage (31) dans la position d'ouverture du robinet.
